# EUROPÄISCHE PATENTSCHRIFT

(11) **EP 3 621 718 B1**
(45) Veröffentlichungstag und Bekanntmachung des Hinweises auf die Patenterteilung: **17.07.2024**
(21) Anmeldenummer: 18726349.6
(22) Anmeldetag: 07.05.2018
(51) Int. Cl.: B01D 35/143, B01D 35/147, B01D 29/21

(54) **FILTERSYSTEM UND VERFAHREN ZUM FILTRIEREN VON FLÜSSIGKEIT**
FILTER SYSTEM AND METHOD FOR FILTERING LIQUID
SYSTÈME FILTRE ET PROCÉDÉ DE FILTRAGE D'UN LIQUIDE

(30) Priorität: 09.05.2017 DE 102017109924
(43) Veröffentlichungstag der Anmeldung: 18.03.2020
(73) Patentinhaber: ARGO-HYTOS Group AG, 6340 Baar (CH)
(72) Erfinder: PICHLMAIER, Valentin, 75015 Bretten (DE); KRÄMER, Roland, 76707 Hambrücken (DE)
(74) Vertreter: Meissner Bolte Partnerschaft mbB
(86) Internationale Anmeldenummer: PCT/EP2018/061724
(87) Internationale Veröffentlichungsnummer: WO 2018/206508

(56) Entgegenhaltungen:
- EP-A1- 1 354 617
- WO-A1-98/43723
- DE-A1- 4 318 215
- DE-U1- 202006 001 950
- DE-U1- 202006 001 950
- US-A- 3 485 380

## Beschreibung

Die Erfindung betrifft ein Filtersystem und ein Verfahren zum Filtrieren von Flüssigkeit.

Hydrauliksysteme werden beispielsweise in Bau-, Land-, Werkzeug- oder Bearbeitungsmaschinen eingesetzt. Das in den Hydrauliksystemen verwendete Hydrauliköl wird üblicherweise filtriert. Die dabei zum Einsatz kommenden Filterelemente nehmen die Schmutzpartikel aus dem Hydrauliköl auf und müssen nach einer bestimmten Zeit ausgetauscht werden.

DE 10 2013 106 264 A1 beschreibt in diesem Zusammenhang ein Filterelement zum Filtrieren einer Flüssigkeit mit einer Endscheibe, die zweigeteilt ist und ein ortsfestes und ein bewegliches Scheibenteil aufweist, wodurch der Austausch des Filterelements erleichtert wird. Ein weiteres Filterelement ist aus EP 2 092 970 A1 bekannt. Die bekannten Filterelemente ermöglichen keine automatische Feststellung des Verschmutzungsgrades des Filtermaterials.

Aus DE 20 2006 001 950 U1 ist ein Fluidfilter mit integriertem Flüssigkeitssensor bekannt. US 3 485 380 A1 offenbart einen Einwegfilter. EP 1 354 617 A1 zeigt einen Luftfilter und DE 43 18 215 A1 ein Filterelement mit einer radial wirkenden Dichtung.

WO 98/43723 A1 zeigt ein Filtersystem mit einem Filtergehäuse und einem Filterkopf, der mit dem Filtergehäuse verbunden ist und Anschlüsse zur Zuführung einer zu filtrierenden sowie zur Abführung einer filtrierten Flüssigkeit umfasst. Um die zugeführte Flüssigkeit zu filtern, ist in dem Filtergehäuse ein zylindrisches Filterelement angeordnet, das eine Endscheibe und ein Filtermaterial aufweist. Der Erfindung liegt die Aufgabe zu Grunde, ein Filtersystem zum Filtrieren einer Flüssigkeit anzugeben, das die Verwendung eines Verschmutzungsanzeigers und/oder eines Bypassventils ermöglicht. Der Erfindung liegt ferner die Aufgabe zu Grunde, ein Verfahren zum Filtrieren von Flüssigkeit anzugeben.

Erfindungsgemäß wird die Aufgabe mit Blick auf das Filtersystem durch den Gegenstand des Anspruchs 1 gelöst. Mit Blick auf das Verfahren zum Filtrieren von Flüssigkeit wird die Aufgabe erfindungsgemäß durch den Gegenstand des Anspruchs 8 gelöst.

Die Erfindung beruht auf dem Gedanken, ein Filtersystem mit einem zylindrischen Filterelement zum Filtrieren einer Flüssigkeit, einem Filtergehäuse, in dem das Filterelement angeordnet ist, und einem Filterkopf mit Anschlüssen, der mit dem Filtergehäuse verbunden ist, anzugeben. Das Filterelement umfasst eine Endscheibe und ein Filtermaterial. Das Filtersystem weist einen Schalter und/oder ein Bypassventil mit einer Verdrehsicherung auf. Die Endscheibe weist eine Durchlassöffnung für gefilterte Flüssigkeit, die von einem Dichtring für einen Anschlussstutzen umgeben ist, und eine Abdeckung für das Filtermaterial auf, wobei der Dichtring einen Freiraum zur Aufnahme der Verdrehsicherung des Schalters und/oder des Bypassventils eines Filtersystems begrenzt, wobei der Freiraum eine Tiefe in axialer Richtung bezogen auf die Längserstreckung des Dichtrings aufweist, die mindestens der Eintauchtiefe der Verdrehsicherung entspricht und der Dichtring eine Oberkante aufweist, wobei die Tiefe des Freiraums mindestens 5 mm ab der Oberkante des Dichtringes beträgt, wobei der Freiraum eine Aufnahmetasche bildet, die sich zwischen dem Dichtring und der Abdeckung erstreckt und einen Boden aufweist, wobei die Abdeckung einen Innenring aufweist und wobei die Aufnahmetasche zwischen dem Dichtring und dem Innenring ausgebildet ist, und wobei der Filterkopf die Verdrehsicherung aufweist, die mit dem Schalter und/oder dem Bypassventil verbunden ist, wobei der Filterkopf und der Freiraum der Endscheibe eine Schnittstelle bilden, so dass die Verdrehsicherung beim Betätigen des Schalters und/oder des Bypassventils in den Freiraum hinein oder aus dem Freiraum heraus bewegbar ist.

Die Erfindung hat den Vorteil, dass die Verdrehsicherung beim Betätigen des Schalters und/oder des Bypassventils im Freiraum bewegt, d.h. in den Freiraum hinein oder aus dem Freiraum heraus bewegt werden kann. Die Verdrehsicherung wird dazu benutzt, den Schalter und/oder das Bypassventil in einer vorgegebenen Lage im Filterkopf zu führen, sodass beispielsweise ein optimales Strömungsverhalten des Bypassventils oder die optimale Lage der Schaltkomponenten des Schalters bei der Montage und im Betrieb erreicht wird. Das Bypassventil und/oder der Schalter erfordern einen Mindesthub für die Betätigung und korrekte Wirkweise. Durch den Freiraum der erfindungsgemäßen Endscheibe wird erreicht, dass die Verdrehsicherung über den gesamten Hub wirksam ist, ohne dass die Verdrehsicherung mit der Endscheibe kollidiert. In der Maximalposition, beispielsweise in der Ruheposition des Schalters und/oder des Bypassventils kann die Verdrehsicherung einerseits komplett in den Freiraum der Endscheibe eintauchen. Andererseits steht für die Betätigung des Schalters und/oder des Bypassventils ein ausreichend großer Verstellweg zur Verfügung, bei dem die Verdrehsicherung den Schalter und/oder das Bypassventil in der gewünschten Lage führt bzw. hält.

Die Begrenzung des Freiraums durch den Dichtring bietet die konstruktive Voraussetzung dafür, das Filtersystem kompakt zu gestalten, weil die Verdrehsicherung in der Nähe des Dichtrings, konkret am Dichtring angeordnet sein kann. Dies bedeutet, dass die Verdrehsicherung im montierten Zustand nah an der Durchlassöffnung angeordnet werden kann. Der Dichtring bildet die Innenwand des Freiraums und dichtet im montierten Zustand gegen den Auslassstutzen ab.

Vorzugsweise ist der Dichtring einteilig mit der Endscheibe ausgebildet.

Die Endscheibe des erfindungsgemäßen Filtersystems erlaubt also nicht nur die Ausrüstung eines Filtersystems mit einem Schalter und/oder einem Bypassventil, sondern sogar die Verwendung eines Schalters und/oder Bypassventils, die einen besonders großen Hub erfordern. Der Schalter kann dazu verwendet werden, um einen bestimmten Verschmutzungsgrad des Filterelements anzuzeigen. Anstelle des Schalters oder zusätzlich zu dem Schalter kann die Endscheibe mit einem Bypassventil verwendet werden, das eine Sicherheitsfunktion, bspw. die Abschaltung der Filterfunktion, bei Erreichen eines bestimmten Verschmutzungsgrades ermöglicht.

Die Endscheibe wird im Zusammenhang mit dem Filtersystem offenbart und beansprucht. Die Endscheibe bildet einen Teil des Filterelements.

Im eingebauten Zustand fungiert die Endscheibe als die Schnittstelle des Filterelements zum Filtersystem, in dem das Filterelement verwendet wird. Dabei dient die Endscheibe einerseits dazu, die gefilterte Flüssigkeit in den Filterkopf des Filtersystems zu überführen. Andererseits dient die Endscheibe dazu, die Schalterfunktion bzw. Bypassfunktionen des Filterkopfes zu ermöglichen. Dazu ist der erfindungsgemäße Freiraum für die Verdrehsicherung in der Endscheibe vorgesehen. Die Verdrehsicherung als solches bildet keinen Teil der Endscheibe sondern wirkt mit dieser im eingebauten Zustand zusammen. Die Verdrehsicherung ist Teil des Filterkopfes bzw. der in den Filterkopf integrierten Bauteile, konkret des Schalters und/oder des Bypassventils.

Bevorzugte Ausführungsformen der Erfindung sind in den Unteransprüchen angegeben.

Bei einer bevorzugten Ausführungsform ist der Freiraum als Aufnahmetasche ausgebildet, die sich zwischen dem Dichtring und der Abdeckung erstreckt und einen Boden aufweist. Die Verdrehsicherung wird in dem Freiraum zwischen dem Dichtring und der Abdeckung angeordnet. Diese Ausführungsform hat den Vorteil, dass eine konstruktiv günstige Bewegungsrichtung des Schalters und/oder des Bypassventils, konkret in axialer Richtung des Filterelements bzw. entlang der Strömungsrichtung der Flüssigkeit durch die Endscheibe möglich ist. Die Erfindung ist nicht auf axial durchströmbare Endscheiben beschränkt. Andere Geometrien der Endscheibe sind möglich. Die Aufnahmetasche hat den weiteren Vorteil, dass diese einen Boden aufweist, sodass der an die Endscheibe angrenzende Filterraum abgedichtet ist.

Vorzugsweise ist die Aufnahmetasche ringförmig ausgebildet. Dies hat einerseits produktionstechnisch den Vorteil, dass die Endscheibe beispielsweise als Spritzgussteil mit nahezu gleichlangen Fließwegen ausgebildet sein kann. Andererseits ist die Endscheibe einfach zu montieren, da eine Ausrichtung der Endscheibe relativ zur Verdrehsicherung nicht erforderlich ist.

Bei einer weiteren bevorzugten Ausführungsform weist die Abdeckung einen Innenring auf, wobei die Aufnahmetasche zwischen dem Dichtring und dem Innenring ausgebildet ist. Der Innenring ermöglicht eine optimale Ausnutzung der Bauhöhe des Filterelements, da das axiale Ende des Filtermaterials im Bereich des Innenrings und damit höher als der Boden der Aufnahmetasche, insbesondere auf derselben Höhe wie die Aufnahmetasche angeordnet sein kann.

Die Höhenlage des Bodens bzw. des axialen Endes des Filtermaterials bezieht sich auf die Längserstreckung des Filterelements.

Der Innenring kann einen Positionierring für ein Stützrohr bilden und hat demnach eine Doppelfunktion, da dieser die Außenwand des Freiraums bzw. der Aufnahmetasche bildet und das Stützrohr positioniert. Auch der Innenring ist bei dieser Ausführungsform einteilig mit der Endscheibe ausgebildet.

Bei einer besonders bevorzugten Ausführung weist der Freiraum eine Tiefe in axialer Richtung bezogen auf die Längserstreckung des Dichtrings auf, die mindestens der Eintauchtiefe der Verdrehsicherung in den Freiraum entspricht. Unter Eintauchtiefe wird die Strecke verstanden, um die die Verdrehsicherung in den Freiraum hinein bewegt wird. Diese Ausführung ist insbesondere im Zusammenhang mit der Aufnahmetasche vorteilhaft, weil auf diese Weise sicher vermieden wird, dass die Verdrehsicherung mit dem Boden der Endscheibe kollidiert.

Vorzugsweise weist der Dichtring eine Oberkante auf, wobei die Tiefe mindestens 5 mm, insbesondere mindestens 10 mm, insbesondere mindestens 15 mm ab der Oberkante des Dichtringes beträgt. Damit steht ein ausreichend langer Verstellweg für die Verdrehsicherung bereit.

Weiter vorzugsweise weist der Freiraum, insbesondere die Aufnahmetasche eine Breite in radialer Richtung ausgehend von dem Dichtring auf, die mindestens 2 mm beträgt. Dies hat den Vorteil, dass die Verdrehsicherung ausreichend stabil ausgebildet werden kann.

Bei dem Filtersystem besteht eine vorteilhafte Ausführungsform darin, dass das Bypassventil im geschalteten Zustand die Einlassseite des Filterkopfes und die Auslassseite des Filterkopfes verbindet. Dies hat den Vorteil, dass ein Notbetrieb Filtersystems möglich ist, wenn das Filtermaterial einen bestimmten Verschmutzungsgrad erreicht hat. Dabei wird in Kauf genommen, dass die Filterfunktion zumindest eingeschränkt ist und zwar maximal solange, bis das Filtermaterial getauscht ist.

Eine weitere vorteilhafte Ausführungsform des Filtersystems besteht darin, dass der Schalter einen Reed-Kontakt zur Erzeugung eines Signals für einen Verschmutzungsanzeiger umfasst. Reed-Kontakte sind als hermetisch dichte Schalter bekannt, die durch ein externes Magnetfeld betätigt werden und sich für die Verwendung in einem hydraulischen Filtersystem gut eignen. Der Schalter umfasst dementsprechend ein Magnetelement, das mit dem Reed-Kontakt zusammenwirkt. Die Erfindung ist nicht auf bestimmte Reed-Kontakttypen eingeschränkt.

Bei einer weiteren bevorzugten Ausführungsform des Filtersystems ist das Filtermaterial an der Abdeckung angeordnet und umgibt die Durchlassöffnung auf deren Umfang.

Im Rahmen des erfindungsgemäßen Verfahrens ist vorgesehen, dass zu filtrierende Flüssigkeit einem erfindungsgemäßen Filtersystem zugeführt, im Filtermaterial filtriert und durch die Durchlassöffnung der Endscheibe als filtrierte Flüssigkeit abgeführt wird. Der Schalter und/oder das Bypassventil werden ab einem Differenzgrenzdruck zwischen der zu filtrierenden Flüssigkeit und der filtrierten Flüssigkeit betätigt. Dadurch kann der Verschmutzungsgrad angezeigt und/oder ein Notbetrieb des Filtersystems eingeleitet werden.

Die Erfindung wird nachfolgend mit weiteren Einzelheiten unter Bezug auf die beigefügten schematischen Zeichnungen anhand eines Ausführungsbeispiels näher erläutert.

In diesen zeigen
- Fig. 1: den Schnitt eines Filtersystems mit einem Filterelement und einer Endscheibe nach einem erfindungsgemäßen Ausführungsbeispiel und
- Fig. 2: eine Detailansicht des Filtersystems nach Fig. 1 im Bereich der Endscheibe.

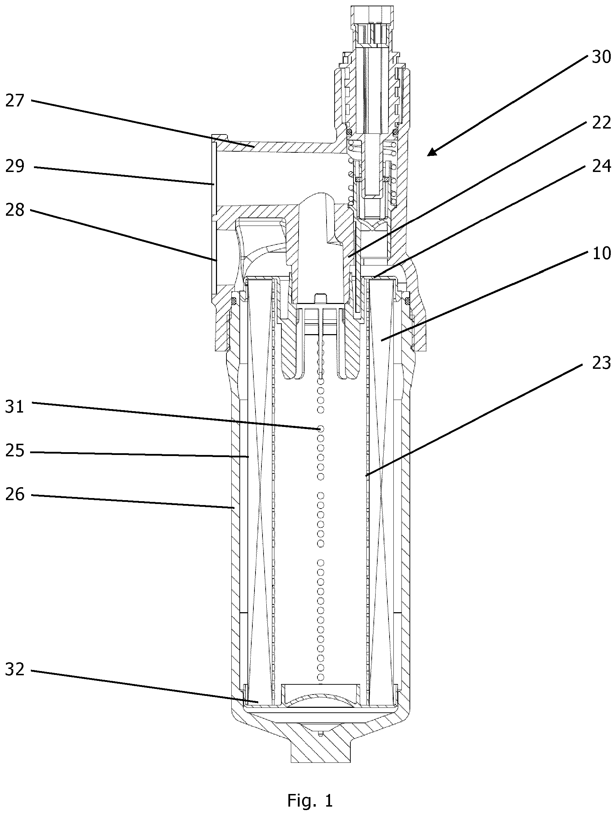

Fig. 1 zeigt ein Filtersystem 30 für den Einsatz in einem Hydrauliksystem beispielsweise für eine Baumaschine, Landmaschine, Werkzeugmaschine oder Bearbeitungsmaschine. Das Filtersystem 30 ist generell für Hydrauliksysteme geeignet, bei denen Hydraulikflüssigkeit, insbesondere Hydrauliköl filtriert werden muss.

Das Filtersystem 30 weist einen Filterkopf 27 mit einem ersten Anschluss 28 und einem zweiten Anschluss 29 auf. Durch den ersten Anschluss 28 tritt im Gebrauch des Filtersystems 30 zu filtrierende Hydraulikflüssigkeit in das Filtersystem ein.

Durch den zweiten Anschluss 29 tritt die filtrierte Hydraulikflüssigkeit aus dem Filtersystem 30 aus. Der Filterkopf 27 ist mit einem Filtergehäuse 26 dicht verbunden, beispielsweise verschraubt. In dem Filtergehäuse 26 ist ein Filterelement 25 angeordnet. Das Filterelement 25 umfasst ein Filtermaterial 10, das im Betrieb die Filterfunktion bewirkt. Die Erfindung ist nicht auf bestimmte Filtermaterialien eingeschränkt. Vorzugsweise ist das Filtermaterial 10 aus sternförmig gefalteten Lagen aufgebaut. Die übergeordnete Kontur bzw. Außenkontur des Filtermaterials 10 ist zylinderförmig. Mit anderen Worten ist die makroskopische Form des Filtermaterials 10 zylinderförmig und die mikroskopische Form des Filtermaterials 10 sternförmig. Die Innenwand des zylinderförmigen Filtermaterials 10 liegt an einem Stützrohr 23 an, das in Längsrichtung sowie auf dem Umfang verteilt angeordnete Durchtrittsöffnungen 31 für die Hydraulikflüssigkeit aufweist. Das Stützrohr 23 stützt das Filtermaterial 10 in radialer Richtung ab.

In axialer Richtung ist das Filterelement 25 durch zwei Endscheiben 24, 32 begrenzt. Die beiden Endscheiben 24, 32 liegen an den Stirnflächen des Filtermaterials 10 an. Die Endscheiben 24, 32, das Stützrohr 23 und das Filtermaterial 10 bilden zusammen das Filterelement 25, das als eine Einheit handhabbar und verkehrsfähig ist. Das Filterelement 25 bildet ein Verschleißteil, das als Ganzes ausgetauscht wird, wenn das Filtermaterial 10 verschmutzt ist.

Die in Einbaurichtung des Filterelements 25 unten angeordnete Endscheibe 32 ist geschlossen und dichtet den Innenraum des Stützrohrs 23 sowie das Filtermaterial 10 im Filtergehäuse 26 nach unten ab. Die in Einbaurichtung des Filterelements 25 oben angeordnete Endscheibe 24 weist eine Durchlassöffnung 11 auf, durch die das gefilterte Hydrauliköl bzw. allgemein die gefilterte Hydraulikflüssigkeit aus dem Filterelement 25 austritt. Die Durchlassöffnung 11 ist zentral in der Endscheibe 24, d.h. mittig angeordnet. Es ist auch denkbar, dass die Durchlassöffnung 11 exzentrisch angeordnet ist. Bei dem Beispiel gemäß Fig. 1 sind das Filtermaterial 10, das Stützrohr 23 und die Durchlassöffnung 11 koaxial angeordnet. Eine andere Anordnung dieser Komponenten ist möglich.

Die obere Endscheibe 24 weist ferner eine Abdeckung 12 auf, an der im eingebauten Zustand das Filtermaterial 10, konkret die Stirnseite des Filtermaterials 10 anliegt. Die Abdeckung 12 weist eine ringförmige Scheibe 43 auf, die koaxial zur Durchlassöffnung 11 angeordnet ist. Die Abdeckung weist ferner einen Innenring 21 und einen Außenring 33 auf, die jeweils mit der ringförmigen Scheibe 43 verbunden sind. Der Innenring 43 und der Außenring 33 sind koaxial angeordnet und bilden mit der Scheibe 43 eine ringförmige Aufnahme für das axiale Ende des Filtermaterials 10. Der Innenring 21 und der Außenring 33 überlappen das Filtermaterial 10 zumindest teilweise.

Am Außenring 33 sind mehrere Abstandshalter 34, beispielsweise in der Form von Nasen angeordnet, die das Filterelement 25 im Gehäuse im Filtergehäuse 26 so positionieren, dass zwischen dem Filtermaterial 10 und der Innenseite des Filtergehäuses 26 ein Ringspalt gebildet ist.

Andere Geometrien der Endscheibe 24 sind möglich.

Im Betrieb strömt das zu filtrierende Hydrauliköl durch den ersten Anschluss 28 in den Filterkopf 27 und von dort an der oberen Endscheibe 24 radial außen vorbei in einen Ringspalt zwischen dem Filterelement 25 und dem Filtergehäuse 26. Von dort durchströmt das Hydrauliköl das Filtermaterial 10 in radialer Richtung, strömt durch das Stützrohr 23 und wird von dort im gereinigten Zustand durch die Durchlassöffnung 11 wieder zurück in den Filterkopf 27 geleitet. Dort tritt das gereinigte Hydrauliköl durch den zweiten Anschluss 29 aus.

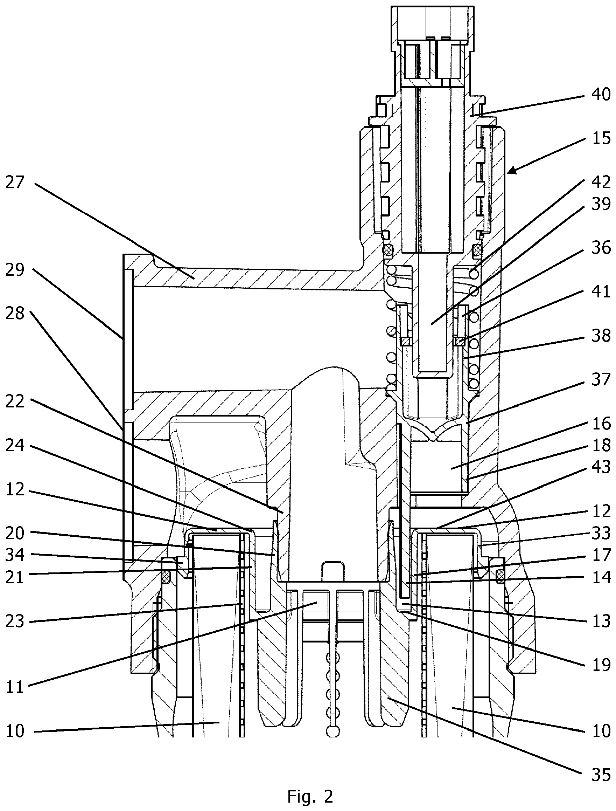

Die obere Endscheibe 24 ist in Fig. 2 vergrößert dargestellt.

Dort ist zu erkennen, dass ein Freiraum 13 zwischen der Durchlassöffnung 11 und der Abdeckung 12, konkret dem Innenring 21 der Abdeckung 12, ausgebildet ist, der im eingebauten Zustand eine Verdrehsicherung 14 eines Schalters 15 und/oder eines Bypassventils 16 des Filterkopfes 27 aufnimmt. Die Verdrehsicherung 14 ist im Beispiel gemäß Fig. 2 als stiftförmiger Fortsatz bzw. Vorsprung des Schalters 15 bzw. des Bypassventils 16 ausgebildet. Die Verdrehsicherung 14 ragt im eingebauten Zustand über die Scheibe 43 der Abdeckung 12 in axialer Richtung des Filterelements 25 vor. Die Verdrehsicherung 14 und der Freiraum 13 fluchten in axialer Richtung, sodass die Verdrehsicherung 14 in den Freiraum 13 eintauchen kann, wenn der Schalter 15 bzw. das Bypassventil 16 sich in der in Fig. 2 dargestellten Ruheposition befindet. Dazu ist die Tiefe des Freiraums 13, d.h. die Erstreckung des Freiraums 13 in axialer Richtung des Filterelements 25 so dimensioniert, dass die Verdrehsicherung 14 vollständig in den Freiraum 13 hinein bewegt werden kann, ohne mit der Endscheibe 24 zu kollidieren. Konkret wird der Abschnitt der Verdrehsicherung 14, der in axialer Richtung über die Abdeckung 12 vorsteht bzw. in das Filterelement 25 hineinragt, vollständig im Freiraum 13 aufgenommen.

Der Freiraum 13 ist als Aufnahmetasche 17 ausgebildet, die sich parallel zur Strömungsrichtung der Flüssigkeit durch die Durchlassöffnung 11 erstreckt. Mit anderen Worten erstreckt sich die Aufnahmetasche 17 in axialer Richtung des Filterelements 25. Die Aufnahmetasche 17 weist einen Boden 19 auf, der die Aufnahmetasche 17 nach unten, d.h. zum Innenraum des Stützrohres 23 hin begrenzt und abdichtet. Damit wird erreicht, dass die gereinigte Flüssigkeit vollständig durch die Durchlassöffnung 11 austritt und die Schmutzseite von der Reinseite des Filtersystems 30 getrennt ist. Die Aufnahmetasche 17 ist ringförmig ausgebildet, sodass bei der Montage der Endscheibe deren Lage in Umfangsrichtung bezogen auf die Verdrehsicherung 14 nicht festgelegt werden muss.

Der Dichtring 20 und der Innenring 21 sind koaxial angeordnet und erstrecken sich in Längsrichtung des Filterelements 25. Der Dichtring 20 grenzt an die Durchlassöffnung 11 an und dient einerseits dazu einen Anschlussstutzen 22 des Filterkopfes 27 aufzunehmen und abzudichten. Andererseits bildet der Dichtring 20 die Innenwand der Aufnahmetasche 17. Der Innenring 21 grenzt an die ringförmige Scheibe 43 der Abdeckung 12 an und erstreckt sich im Wesentlichen parallel zum Dichtring 20. Der Innenring 21 dient dazu, das Stützrohr 23 zumindest bei der Montage zu positionieren. Außerdem bildet der Innenring 21 die Außenwand der Aufnahmetasche 17.

Die Aufnahmetasche 17 kann auch als Ringspalt zwischen der Abdeckung 12 und der Durchlassöffnung 11 verstanden werden, der nach unten, d.h. in Richtung der unteren Endscheibe 32 geschlossen ist.

Auf der vom Auslassstutzen 22 abgewandten Seite der Endscheibe 24 sind mehrere Axialrippen 35 auf dem Umfang der Durchlassöffnung 11 angeordnet, die sich im eingebauten Zustand in den Innenraum des Stützrohrs 23 erstrecken.

Wie in Fig. 2 weiter zu erkennen, weist der Filterkopf 27 eine Schalter-und Ventileinheit 36 auf, die einen Schalter 15 und ein Bypassventil 16 als ein integriertes Bauteil umfasst. Es ist auch möglich, den Schalter 15 und das Bypassventil 16 als gesonderte Bauteile jeweils mit einer eigenen Verdrehsicherung 14 auszubilden. Die Aufnahmetasche 17 kann mehrere Verdrehsicherungen auf dem Umfang verteilt aufnehmen. Es ist auch möglich, nur einen Schalter 15 oder nur ein Bypassventil 16 im Filterkopf 27 vorzusehen.

Bei dem Beispiel gemäß Fig. 2 ist die Verdrehsicherung 14 als stiftförmiger Fortsatz bzw. Vorsprung an einem Ventilkörper 37 des Bypassventils 16 angeordnet. Vorzugsweise sind die Verdrehsicherung 14 und der Ventilkörper 37 einteilig ausgebildet. Der Ventilkörper 37 ist zylindrisch aufgebaut. Die Verdrehsicherung 14 ist, bezogen auf den Ventilkörper 37 exzentrisch, konkret am Umfang des Ventilkörpers 37 angeordnet. Dies hat den Vorteil, dass die Verdrehsicherung 14 nahe an der Durchlassöffnung 11 angeordnet werden kann.

Der Ventilkörper 37 weist einen Kolben 18 auf, der im Filterkopf 27 gleitverschieblich geführt ist.

Das Bypassventil 16, konkret der Ventilkörper 37 weist mehrere Strömungsöffnungen auf, die auf dem Umfang des Bypassventils 16 bzw. des Ventilkörper 37 verteilt angeordnet sind. Im Ruhezustand gemäß Fig. 2 sind die Strömungsöffnungen geschlossen, sodass die Reinseite und die Schmutzseite des Filtersystems 30 getrennt sind.

Das Bypassventil 16 weist eine Axialführung 38 auf, beispielsweise in der Form von Führungsrippen, die einen koaxial angeordneten Zapfen 39 des Schalters 15 umfassen. Der Zapfen 39 ist mit einer fest im Filtergehäuse 27 gelagerten Schalterkomponente 40 verbunden, der die Elektronik des Schalters 15 enthält. Die Axialführung 38 des Bypassventils 16 ist mit einem Magnetelement 41 verbunden, das auf dem Zapfen 39 in axialer Richtung zusammen mit dem Bypassventil 16 bewegt werden kann, wenn ein entsprechender Differenzgrenzdruck erreicht wird. Dadurch wird der Schalter 15 betätigt. Zwischen dem Ventilkörper 37 und der ortsfest angeordneten Schalterkomponente 40 ist eine Feder 42 angeordnet, die dafür sorgt, dass das Bypassventil 16 und der Schalter 15 in der Ruhestellung verbleiben, bis der Differenzgrenzdruck bei einem bestimmten Verschmutzungsgrad des Filterelements 25 erreicht ist. Der Reed-Kontakt selbst kann in der Ruhestellung geöffnet oder geschlossen sein.

Die Verdrehsicherung 14 blockiert in Umfangsrichtung des Ventilkörper 37 bzw. allgemein des Bypassventils 16 eine Bewegung, sodass der Ventilkörper 37 im Wesentlichen nur in axialer Richtung des Filterelements 25 bewegt werden kann. Dazu ist die Verdrehsicherung 14 mit dem Filterkopf in Eingriff bspw. durch eine entsprechende Nut im Filterkopf 27.

Da die Verdrehsicherung 14 in Richtung des Filterelements 25 über den Ventilkörper 37 hinausragt, wird erreicht, dass die Verdrehsicherung 14 mit dem Filtergehäuse 27 in Eingriff bleibt, selbst wenn das Bypassventil 16 bzw. der Schalter 15 betätigt sind. Durch die Länge der Verdrehsicherung 14 können unterschiedliche Schaltpunkte des Bypassventils 16 und des Schalters 15 eingestellt werden. Beispielsweise kann der Schalter 15 bereits bei einem niedrigeren Differenzgrenzdruck schalten als das Bypassventil 16 bzw. umgekehrt.

Das Filtersystem gemäß Fig. 1 2 funktioniert im Gebrauch wie folgt.

Durch den ersten Anschluss 28 wird zu filtrierendes Hydrauliköl dem Filterelement 25 zugeführt, das das Filtermaterial 10 in radialer Richtung durchströmt. Aus dem Innenraum des Stützohres 23 gelangt das gereinigte Hydrauliköl durch die Durchlassöffnung 11 zurück in den Filterkopf 27 und von dort durch den zweiten Anschluss 29 zurück in das Hydrauliksystem. Mit zunehmendem Verschmutzungsgrad des Filtermaterials 10 steigt der Staudruck im Bereich des ersten Anschlusses 28, der über einen Ringraum mit dem Bypassventil fluidverbunden ist, sodass das Bypassventil 16 mit dem entsprechenden Druck beaufschlagt wird. Wenn der dadurch entstehende Differenzdruck zwischen der Schmutzseite und der Reinseite des Filtersystems 30 einem bestimmten Grenzwert überschreitet, der sich aus der Federkraft der Feder ergibt, wird das Bypassventil 16 betätigt, d.h. aus der Ruhelage heraus bewegt. Dabei wird die Verdrehsicherung 14 in axialer Richtung mitbewegt, die bei der Hubbewegung des Bypassventils 16 in Eingriff mit dem Filtergehäuse 27 bleibt und so das Bypassventil 16 sowie den Schalter 15 in Umfangsrichtung positioniert. Das Magnetelement 41 wird dabei mitbewegt, sodass der Schalter 15 betätigt wird und den Verschmutzungsgrad anzeigt. Wenn der Verschmutzungsgrad weiter steigt, wird das Bypassventil 16 geschaltet, sodass die im Bypassventil 16 angeordneten Strömungsöffnungen freigegeben werden und die Reinseite mit der Schmutzseite unter Umgehung des Filterelements 25 verbunden wird (Bypass).

Sobald das verschmutzte Filterelement 25 gegen ein neues Filterelement 25 getauscht wurde, sinkt der Staudruck und das Bypassventil sowie der Schalter 15 kehren in die Ruhelage zurück. Dabei taucht die Verdrehsicherung 14 wieder in den Freiraum 13 der Endscheibe 24 ein.

### Bezugszeichenliste

- 10: Filtermaterial
- 11: Durchlassöffnung
- 12: Abdeckung
- 13: Freiraum
- 14: Verdrehsicherung
- 15: Schalter
- 16: Bypassventil
- 17: Aufnahmetasche
- 18: Kolben
- 19: Boden
- 20: Dichtring
- 21: Innenring
- 22: Auslassstutzen
- 23: Stützrohr
- 24: (obere) Endscheibe
- 25: Filterelement
- 26: Filtergehäuse
- 27: Filterkopf
- 28: erster Anschluss
- 29: zweiter Anschluss
- 30: Filtersystem
- 31: Durchtrittsöffnungen
- 32: (untere) Endscheibe
- 33: Außenring
- 34: Abstandshalter
- 35: Axialrippen
- 36: Schalter-und Ventileinheit
- 37: Ventilkörper
- 38: Axialführung
- 39: Zapfen
- 40: Schalterkomponente
- 41: Magnetelement
- 42: Feder
- 43: Scheibe

## Patentansprüche

1. Filtersystem (30) mit einem zylindrischen Filterelement (25) zum Filtrieren einer Flüssigkeit, einem Filtergehäuse (26), in dem das Filterelement (25) angeordnet ist, und einem Filterkopf (27) mit Anschlüssen (28, 29), der mit dem Filtergehäuse (26) verbunden ist, wobei das Filterelement eine Endscheibe (24) und ein Filtermaterial (10) umfasst,
**dadurch gekennzeichnet, dass**
das Filtersystem einen Schalter und/oder ein Bypassventil mit einer Verdrehsicherung aufweist,
wobei die Endscheibe eine Durchlassöffnung (11) für gefilterte Flüssigkeit, die von einem Dichtring (20) für einen Anschlussstutzen umgeben ist, und eine Abdeckung (12) für das Filtermaterial (10) aufweist, wobei der Dichtring (20) einen Freiraum (13) zur Aufnahme der Verdrehsicherung (14) des Schalters (15) und/oder des Bypassventils (16) eines Filtersystems (30) begrenzt, wobei der Freiraum (13) eine Tiefe in axialer Richtung bezogen auf die Längserstreckung des Dichtrings (20) aufweist, die mindestens der Eintauchtiefe der Verdrehsicherung (14) entspricht und der Dichtring (20) eine Oberkante aufweist, wobei die Tiefe des Freiraums (13) mindestens 5 mm ab der Oberkante des Dichtringes (20) beträgt, wobei der Freiraum (13) eine Aufnahmetasche (17) bildet, die sich zwischen dem Dichtring (20) und der Abdeckung (12) erstreckt und einen Boden (19) aufweist, wobei die Abdeckung (12) einen Innenring (21) aufweist und wobei die Aufnahmetasche (17) zwischen dem Dichtring (20) und dem Innenring (21) ausgebildet ist, und wobei der Filterkopf (27) die Verdrehsicherung (14) aufweist, die mit dem Schalter (15) und/oder dem Bypassventil (16) verbunden ist, wobei der Filterkopf (27) und der Freiraum (13) der Endscheibe (24) eine Schnittstelle bilden, so dass die Verdrehsicherung (14) beim Betätigen des Schalters (15) und/oder des Bypassventils (16) in den Freiraum (13) hinein oder aus dem Freiraum (13) heraus bewegbar ist.

2. Filtersystem (30) nach Anspruch 1,
**dadurch gekennzeichnet, dass**
der Freiraum (13), insbesondere die Aufnahmetasche (17), ringförmig ausgebildet ist.

3. Filtersystem (30) nach Anspruch 1 oder 2,
**dadurch gekennzeichnet, dass**
der Innenring (21) einen Positionierring für ein Stützrohr (23) bildet.

4. Filtersystem (30) nach einem der Ansprüche 1 bis 3,
**dadurch gekennzeichnet, dass**
der Freiraum (13) eine Breite in radialer Richtung ausgehend von dem Dichtring (20) auf, die mindestens 2 mm beträgt.

5. Filtersystem (30) nach Anspruch 4,
**dadurch gekennzeichnet, dass**
ein Stützrohr (23) an der Innenseite des Filtermaterials (10) angeordnet und mit der Endscheibe (24) verbunden ist.

6. Filtersystem (30) nach einem der vorhergehenden Ansprüche,
**dadurch gekennzeichnet, dass**
das Bypassventil (16) im geschalteten Zustand die Einlassseite des Filterkopfes (27) und die Auslassseite des Filterkopfes (27) verbindet.

7. Filtersystem (30) nach einem der vorhergehenden Ansprüche,
**dadurch gekennzeichnet, dass**
der Schalter (15) einen Reed-Kontakt zur Erzeugung eines Signals für einen Verschmutzungsanzeiger umfasst.

8. Verfahren zum Filtrieren von Flüssigkeit, bei dem zu filtrierende Flüssigkeit einem Filtersystem (30) nach einem der Ansprüche 1 bis 7 zugeführt, im Filtermaterial (10) filtriert und durch die Durchlassöffnung (11) der Endscheibe (24) als filtrierte Flüssigkeit abgeführt wird, wobei der Schalter (15) und/oder das Bypassventil (16) ab einem vorbestimmten Differenzgrenzdruck zwischen der zu filtrierenden Flüssigkeit und der filtrierten Flüssigkeit betätigt wird.

9. Filtersystem (30) nach einem der Ansprüche 1 bis 7,
**dadurch gekennzeichnet, dass**
das Filtermaterial (10) an der Abdeckung (12) angeordnet ist und die Durchlassöffnung (11) auf deren Umfang umgibt.

## Claims

1. A filter system (30) comprising a cylindrical filter element (25) for filtering a liquid, a filter housing (26) in which the filter element (25) is arranged, and a filter head (27) with connections (28, 29) which is connected to the filter housing (26), the filter element comprising an end plate (24) and a filter material (10), **characterized in that**
the filter system has a switch and/or a bypass valve with an anti-rotation lock,
the end plate having a through opening (11) for filtered liquid which is surrounded by a sealing ring (20) for a connecting piece, and a cover (12) for the filter material (10), the sealing ring (20) delimiting a free space (13) for accommodating the anti-rotation lock (14) of the switch (15) and/or the bypass valve (16) of a filter system (30), the free space (13) having a depth in the axial direction relative to the longitudinal extent of the sealing ring (20) which corresponds at least to the immersion depth of the anti-rotation lock (14), and the sealing ring (20) having an upper edge, the depth of the free space (13) being at least 5 mm from the upper edge of the sealing ring (20), the free space (13) forming an accommodating pocket (17) which extends between the sealing ring (20) and the cover (12) and has a base (19), the cover (12) having an inner ring (21) and the accommodating pocket (17) being formed between the sealing ring (20) and the inner ring (21), and the filter head (27) having the anti-rotation lock (14) which is connected to the switch (15) and/or the bypass valve (16), the filter head (27) and the free space (13) of the end plate (24) forming an interface so that the anti-rotation lock (14) can be moved into the free space (13) or out of the free space (13) when the switch (15) and/or the bypass valve (16) is actuated.

2. The filter system (30) according to claim 1,
**characterized in that**
the free space (13), in particular the accommodating pocket (17), is annular in shape.

3. The filter system (30) according to claim 1 or 2,
**characterized in that**
the inner ring (21) forms a positioning ring for a support tube (23).

4. The filter system (30) according to any one of claims 1 to 3,
**characterized in that**
the free space (13) has a width in the radial direction starting from the sealing ring (20), which is at least 2 mm.

5. The filter system (30) according to claim 4,
**characterized in that**
a support tube (23) is arranged on the inside of the filter material (10) and is connected to the end plate (24) .

6. The filter system (30) according to any one of the preceding claims,
**characterized in that**
the bypass valve (16), in the switched state, connects the inlet side of the filter head (27) and the outlet side of the filter head (27).

7. The filter system (30) according to any one of the preceding claims,
**characterized in that**
the switch (15) comprises a reed contact for generating a signal for a contamination indicator.

8. A method for filtering liquid, in which liquid to be filtered is supplied to a filter system (30) according to any one of claims 1 to 7, is filtered in the filter material (10) and is discharged through the through opening (11) of the end plate (24) as filtered liquid, the switch (15) and/or the bypass valve (16) being actuated starting from a predetermined differential limit pressure between the liquid to be filtered and the filtered liquid.

9. The filter system (30) according to any one of claims 1 to 7,
**characterized in that**
the filter material (10) is arranged on the cover (12) and surrounds the through opening (11) on the circumference thereof.

## Revendications

1. Système filtre (30) avec un élément de filtre cylindrique (25) pour filtrer un liquide, un boîtier de filtre (26), dans lequel l'élément de filtre (25) est disposé et une tête de filtre (27) avec des raccords (28, 29), qui est reliée au boîtier de filtre (26), sachant que l'élément de filtre comprend un disque d'extrémité (24) et un matériau de filtre (10), **caractérisé en ce que**
le système filtre comporte un contacteur et/ou une soupape de dérivation avec une sécurité anti-rotation,
sachant que le disque d'extrémité comporte une ouverture de passage (11) pour le liquide filtré, qui est entourée par une bague d'étanchéité (20) pour un embout de raccordement et un élément de couverture (12) pour le matériau de filtre (10), sachant que la bague d'étanchéité (20) limite un espace libre (13) pour recevoir la sécurité anti-rotation (14) du contacteur (15) et/ou de la soupape de dérivation (16) d'un système filtre (30), sachant que l'espace libre (13) comporte une profondeur dans la direction axiale par rapport à l'extension longitudinale de la bague d'étanchéité (20), qui correspond au moins à la profondeur de plongée de la sécurité anti-rotation (14) et la bague d'étanchéité (20) comporte un bord supérieur, sachant que la profondeur de l'espace libre (13) comporte au moins 5 mm à partir du bord supérieur de la bague d'étanchéité (20), sachant que l'espace libre (13) forme une poche de réception (17), qui s'étend entre la bague d'étanchéité (20) et l' élément de couverture (12) et comporte un fond (19), sachant que l'élément de couverture (12) comporte une bague intérieure (21) et sachant que la poche de réception (17) est constituée entre la bague d'étanchéité (20) et la bague intérieure (21) et sachant que la tête de filtre (27) comporte la sécurité anti-rotation (14), qui est reliée à l'contacteur (15) et/ou à la soupape de dérivation (16), sachant que la tête de filtre (27) et l'espace libre (13) du disque d'extrémité (24) forment une interface de telle manière que la sécurité anti-rotation (14) peut être déplacée lors de l'actionnement du contacteur (15) et/ou de la soupape de dérivation (16) vers l'intérieur de l'espace libre (13) ou en dehors de l'espace libre (13).

2. Système filtre (30) selon la revendication 1,
**caractérisé en ce que**,
l'espace libre (13), en particulier la poche de réception (17), est constitué dans une forme annulaire

3. Système filtre (30) selon la revendication 1 ou 2,
**caractérisé en ce que**
la bague intérieure (21) forme une bague de positionnement pour un tube de support (23).

4. Système filtre (30) selon l'une quelconque des revendications 1 à 3,
**caractérisé en ce que**
l'espace libre (13) comporte une largeur dans la direction radiale en partant de la bague d'étanchéité (20), qui est d'au moins 2 mm.

5. Système filtre (30) selon la revendication 4,
**caractérisé en ce que**,
le tube de support (23) est disposé sur le côté intérieur du matériau de filtre (10) et est relié au disque d'extrémité (24).

6. Système filtre (30) selon l'une quelconque des revendications précédentes
**caractérisé en ce que**,
la soupape de dérivation (16) relie à l'état connecté le côté d'entrée de la tête de filtre (27) et le côté sortie de la tête de filtre (27).

7. Système filtre (30) selon l'une quelconque des revendications précédentes,
**caractérisé en ce que**
le contacteur (15) comprend un contacteur à lames souples destiné à produire un signal pour un indicateur d'encrassement.

8. Procédé de filtrage d'un liquide pour lequel du liquide à filtrer est acheminé à un système filtre (30) selon l'une quelconque des revendications 1 à 7, est filtré dans le matériau filtre (10) et est évacué par l'ouverture de passage (11) du disque d'extrémité (24) sous la forme de liquide filtré, sachant que le contacteur (15) et/ou la soupape de dérivation (16) est actionné(e) à partir d'une pression limite différentielle prédéterminée entre le liquide à filtrer et le liquide filtré.

9. Système filtre (30) selon l'une quelconque des revendications 1 à 7,
**caractérisé en ce que**
le matériau filtre (10) est disposé sur l'élément de couverture (12) et entoure l'ouverture de passage (11) entoure sa périphérie.
